# EUROPEAN PATENT SPECIFICATION

(11) **EP 3 582 055 B1**
(45) Date of publication and mention of the grant of the patent: **06.07.2022**
(21) Application number: 18750852.8
(22) Date of filing: 07.02.2018
(51) Int. Cl.: G05D 1/02

(54) **SOLAR PANEL CLEANING ROBOT POSITIONING DEVICE AND POSITIONING METHOD THEREOF**
ROBOTERPOSITIONIERUNGSVORRICHTUNG ZUR REINIGUNG VON SOLARMODULEN UND POSITIONIERUNGSVERFAHREN DAFÜR
DISPOSITIF DE POSITIONNEMENT DE ROBOT DE NETTOYAGE DE PANNEAU SOLAIRE ET SON PROCÉDÉ DE POSITIONNEMENT

(30) Priority: 10.02.2017 CN 201710073500
(43) Date of publication of application: 18.12.2019
(73) Proprietor: Suzhou Radiant Photovoltaic Technology Co., Ltd, Suzhou, Jiangsu 215164 (CN)
(72) Inventor: PENG, Fang, Suzhou, Jiangsu 215164 (CN); XU, Jianrong, Suzhou, Jiangsu 215164 (CN); ZHOU, Feng, Suzhou, Jiangsu 215164 (CN); WANG, Jiaqing, Suzhou, Jiangsu 215164 (CN)
(74) Representative: Petraz, Gilberto Luigi
(86) International application number: PCT/CN2018/075523
(87) International publication number: WO 2018/145631

(56) References cited:
- CN-A- 105 680 789
- CN-A- 106 227 215
- CN-A- 106 269 624
- CN-A- 106 774 346
- CN-A- 106 873 587
- CN-A- 106 873 587
- CN-U- 204 948 013
- CN-U- 206 489 451
- CN-U- 206 541 195
- JP-A- 2015 013 281
- KR-A- 20160 033 615
- US-B1- 8 726 458

## Description

### BACKGROUND OF DISCLOSURE

### 1. Field of Disclosure

The present disclosure relates to cleaning robot fields, and more particularly, to a positioning apparatus for a solar panel cleaning robot and a positioning method thereof.

### 2. Description of Related Art

As fossil fuels are in a decline, new renewable solar energy has become an important part of energy used by humans, as solar energy technology has been rapidly developed in all countries in the world over the past decade. A solar panel refers to a device that converts solar energy directly into electrical energy using semiconductor materials that generate photovoltaic (PV) effect when exposed to sunlight. The solar panels are suitable for applications ranging from large power stations to small portable chargers. In recent years, the solar panels have had rapid development.

Work environment of the solar panels can only be outdoors, where a biggest problem affecting their work is not thunderstorms, but dust that has accumulated over the years. The dust or other adhesion attached to the solar panel may affect light transmittance of the panel and limit photoelectric efficiency, which will seriously affect efficiency of the panel directly obtaining the sunlight, reduce panel energy absorption and conversion efficiency, and reduce power generation efficiency. Conventional solar panels in use can only rely on regular completion of manual cleaning work. Because of larger solar panels, large power stations use more panels at the same time, dust will be accumulated repeatedly, and repeated cleaning is required. Therefore, labor costs are high, cleaning efficiency is low, and cleaning effect is poor. In many occasions, in order to improve space utilization rate, solar panels are set in high places by mounting brackets, which brings more difficulty and risks for cleaning. In order to reduce cleaning costs, many users of the solar panels can only choose not to clean, and therefore can only be forced to bear the power loss caused by dust. Thus, a new automatic cleaning device is needed for automatic cleaning the solar panels.

For this, with reference to related content specifically disclosed in a China patent application No. 201610836028.8, a novel cleaning robot is developed to clean the solar panels. However, with continuing practical use of the cleaning robot, research for novel functions is required to overcome various practical problems.

For example, a staff member on the ground fails to be aware of real-time positions of the cleaning robot on the solar panel. Due to unknown real-time positions, real-time working conditions of the cleaning robot cannot be monitored. Also, as the solar panel may be set high, even though the cleaning robot fails, stops to operate or deviates from the route, a staff member is unable to be aware of it in time.

Therefore, it is necessary to develop a novel positioning apparatus for a solar panel cleaning robot to overcome deficiencies in conventional technologies.

KR 2016-0033615A describes a cleaning robot for a solar cell panel and a cleaning method for the solar cell panel. The cleaning robot comprises a camera, a corner recognizing part which recognizes a corner area of the solar cell panel, and four disc-shaped drive wheels which are individually driven and change a contact point with a bottom surface a driving speed. Therefore, the cleaning robot for the solar cell panel cleans a surface of the solar cell panel while moving along a set cleaning route.

### SUMMARY

The invention is defined by the independent claims.

An object of the present disclosure is to provide a positioning apparatus for a solar panel cleaning robot to solve problems that conventional cleaning robots fail to be positioned in real-time, causing the whole working conditions not to be monitored.

In order to solve the above problems, the present disclosure provides a positioning apparatus for a solar panel cleaning robot, the solar panel cleaning robot including a vehicle body configured to move or stop on at least one solar panel, each solar panel being rectangular in shape, four recognizable frame edges being disposed on edges of each solar panel, lines of latitude and longitude perpendicular to one another being disposed on each solar panel to form a coordinate system of panel. The positioning apparatus includes an image capturing unit, a frame edge recognizing unit, a latitude-and-longitude line recognizing unit, and a vehicle-body position calculating unit. The image capturing unit is configured to acquire peripheral images and/or pictures of the vehicle body in real-time. The frame edge recognizing unit is connected to the image capturing unit and is configured to recognize peripheral frame edges of the vehicle body according to the images and/or the pictures and a moving direction of the vehicle body. The latitude-and-longitude line recognizing unit is connected to the image capturing unit and is configured to recognize the numbers of latitude lines and longitude lines existing between the vehicle body and the frame edges according to the images and/or the pictures and positions of the frame edges. The vehicle-body position calculating unit is connected to the latitude-and-longitude line recognizing unit and is configured to calculate a coordinate scope of the vehicle body on the solar panel according to the numbers of latitude lines and longitude lines between the vehicle body and the frame edges.

Further, in other embodiments, the positioning apparatus further includes an image-capturing-unit position calculating unit connected to the vehicle-body position calculating unit and configured to calculate a coordinate scope of the image capturing unit on the solar panel according to the size of the vehicle body, the coordinate scope of the vehicle body on the solar panel, and relative positions of the image capturing unit and the vehicle body.

Further, in other embodiments, the positioning apparatus further includes a center-of-vehicle position calculating unit connected to the vehicle-body position calculating unit and configured to calculate a coordinate scope of the center of the vehicle body on the solar panel according to the size of the vehicle body and the coordinate scope of the vehicle body on the solar panel.

Further, in other embodiments, the positioning apparatus further includes a global positioning system (GPS) unit and a panel judging unit. The GPS unit is configured to acquire a GPS position of the vehicle body in real-time. The panel judging unit is connected to the GPS unit and is configured to judge information about the solar panel on which the vehicle body is located according to the GPS position of the vehicle body and a panel distribution chart.

Further, in other embodiments, the positioning apparatus further includes a wireless communication unit wirelessly connected to a server and configured to wirelessly transmit the peripheral images and/or a positioning data of the vehicle body to the server. The positioning data of the vehicle body includes, but not limited to, information about the solar panel on which the vehicle body is located, the coordinate scope of the vehicle body on the solar panel, a coordinate scope of the image capturing unit on the solar panel, and a coordinate scope of the center of the vehicle body on the solar panel.

Further, in other embodiments, the positioning apparatus further includes a storage configured to prestore the numbers of latitude lines and longitude lines on each solar panel and/or the size of the vehicle body and/or relative positions of the image capturing unit and the vehicle body and/or at least one panel distribution chart.

Further, in other embodiments, the image capturing unit is disposed on the top of the vehicle body or on outer sidewalls of the vehicle body, and the image capturing unit has a horizontal view angle between 0 and 360 degrees. The image capturing unit includes, but not limited to, a camera or an image sensor.

Further, in other embodiments, the positioning apparatus further includes an installed support. The bottom of the installed support is installed fixedly on the top of the vehicle body, and the image capturing unit is installed on the top of the installed support.

Further, another object of the present disclosure is to provide a method of positioning a solar panel cleaning robot including a vehicle body configured to move or stop on the solar panel, each solar panel being rectangular in shape, four recognizable frame edges being disposed on edges of each solar panel, lines of latitude and longitude perpendicular to one another being disposed on each solar panel to form a coordinate system of panel, the method including: an image capturing step for acquiring peripheral images and/or pictures of the vehicle body in real-time; a frame edge recognizing step for recognizing peripheral frame edges of the vehicle body according to the images and/or the pictures and a moving direction of the vehicle body; a latitude-and-longitude line recognizing step for recognizing the numbers of latitude lines and longitude lines existing between the vehicle body and the frame edges according to the images and/or the pictures and positions of the frame edges; and a vehicle-body position calculating step for calculating a coordinate scope of the vehicle body on the solar panel according to the numbers of latitude lines and longitude lines between the vehicle body and the frame edges.

Further, in other embodiments, the method further includes an image-capturing-unit position calculating step for calculating a coordinate scope of an image capturing unit on the solar panel according to the size of the vehicle body, the coordinate scope of the vehicle body on the solar panel, and relative positions of the image capturing unit and the vehicle body.

Further, in other embodiments, the method further includes a center-of-vehicle position calculating step for calculating a coordinate scope of the center of the vehicle body on the solar panel according to the size of the vehicle body and the coordinate scope of the vehicle body on the solar panel.

Further, in other embodiments, the method further includes, prior to the image capturing step, a global positioning system (GPS) positioning step for acquiring a GPS position of the vehicle body in real-time, and a panel judging step for judging information about the solar panel on which the vehicle body is located according to the GPS position of the vehicle and a panel distribution chart.

Further, in other embodiments, the method further includes an image transmitting step for wirelessly transmitting the peripheral images of the vehicle body to a server, and/or a positioning data transmitting step for wirelessly transmitting a positioning data of the vehicle body to the server. The positioning data of the vehicle body includes, but not limited to, information about the solar panel on which the vehicle body is located, the coordinate scope of the vehicle body on the solar panel, a coordinate scope of an image capturing unit on the solar panel, and a coordinate scope of the center of the vehicle body on the solar panel.

The advantage of the present disclosure is that, a positioning apparatus for a solar panel cleaning robot and a positioning method thereof are provided to determine accurate regional positions of a vehicle body on a solar panel having a large area through GPS and recognizing peripheral latitude lines and longitude lines of the vehicle body on the solar panel so that operators can be aware of real-time positions of the cleaning robot immediately.

### BRIEF DESCRIPTION OF THE DRAWINGS

FIG. 1 is a schematic diagram of a cleaning robot on a solar panel according to an embodiment of the present disclosure.
FIG. 2 is a logical structural diagram of a positioning apparatus of a cleaning robot according to an embodiment of the present disclosure.
FIG. 3 is a schematic diagram of a whole appearance of a cleaning robot according to an embodiment of the present disclosure.

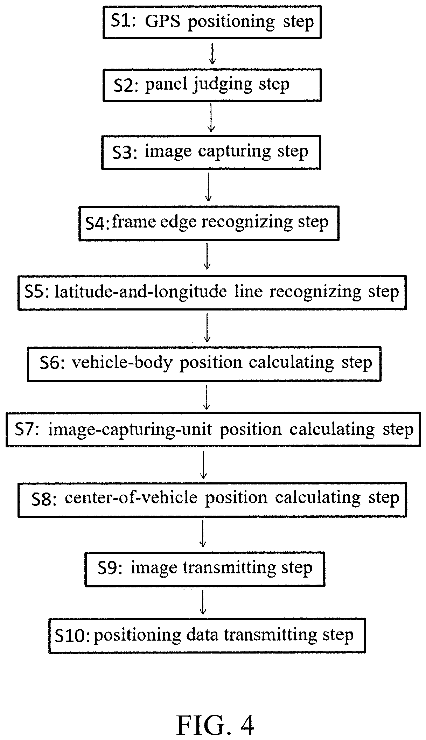

FIG. 4 is a stepwise flowchart illustrating a method of positioning a solar panel cleaning robot according to an embodiment of the present disclosure.
FIG. 5 is a schematic projection diagram of a cleaning robot in a direction of longitude line in a coordinate system resulted from latitude lines and longitude lines on a solar panel according to an embodiment of the present disclosure.
FIG. 6 is a schematic projection diagram of a cleaning robot in a direction of latitude line in a coordinate system resulted from latitude lines and longitude lines on a solar panel according to an embodiment of the present disclosure.

The reference numerals in the figures are as follows: cleaning robot 100, solar panel 200, frame edge 210, longitude line 211, latitude line 212, bridge board 300, vehicle body 10, installed support 110, image capturing unit 11, frame edge recognizing unit 12, latitude-and-longitude line recognizing unit 13, vehicle-body position calculating unit 14, image-capturing-unit position calculating unit 15, center-of-vehicle position calculating unit 16, global positioning system (GPS) unit 17, panel judging unit 18, wireless communication unit 19, storage 20, server 30.

### DETAILED DESCRIPTION OF EMBODIMENTS

A preferred embodiment of the present invention will be introduced with reference to appended figures as follows to demonstrate that the present invention may be implemented. The present invention can be embodied in many different forms of embodiment, and the scope of protection of the present invention is not limited to the embodiments set forth herein.

In the appended figures, structurally identical components are designated by the same reference numerals, and structurally or functionally similar components throughout are designated by similar numerical reference numerals. The dimensions and thicknesses of each component shown in the figures are arbitrarily shown. The size and thickness of each component are not limited, and for the sake of clarity, the thickness of the components is exaggerated somewhat in some places in the figures.

Direction terms mentioned by the present invention, for example "upper", "lower", "front", "rear", "left", "right", "inner", "outer", "side", etc. are merely directions in the appended figures for only explaining and illustrating the present invention but not to limit the protection scope of the present invention.

When some part is described to be "on" another part, the part may be directly disposed on the other part; alternatively, an intervening part may exist, the part is disposed on the intervening part, and the intervening part is disposed on the other part. When a part is described to be "installed on" or "connected to" another part, it may be understood that the parts are directly "installed" or "connected" to each other, alternatively it is understood that one part is "installed" or "connected" to the other part through an intervening part.

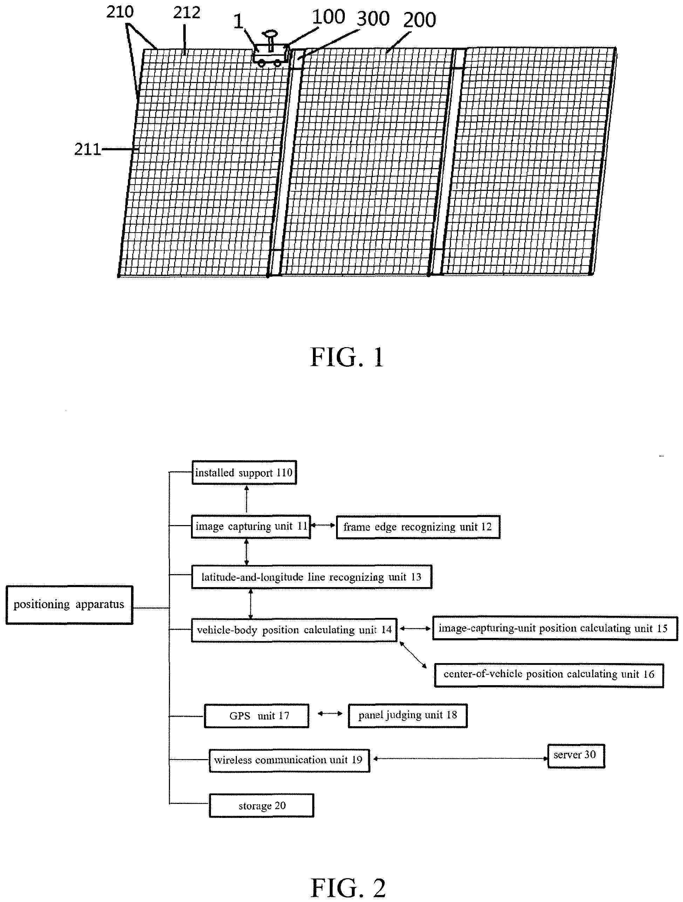

As shown in FIG. 1, an embodiment of the present disclosure relates to a positioning apparatus for a cleaning robot 100. The cleaning robot 100 includes a vehicle body 10 configured to move or stop on at least one solar panel 200. As shown in FIG. 1, each solar panel 200 is rectangular in shape, and four recognizable frame edges 210 are disposed on edges of each solar panel 200. Latitude lines 212 and longitude lines 211 are disposed on each solar panel 200. The latitude lines 212 are perpendicular to the longitude lines 211, so that a coordinate system of panel is formed. In general, multiple solar panels 200 are spliced together to form a larger light-capturing area. A bridge board 300 is disposed between two adjacent solar panels to connect the solar panels.

Further, please refer to FIG. 2, the positioning apparatus includes an image capturing unit 11, a frame edge recognizing unit 12, a latitude-and-longitude line recognizing unit 13, a vehicle-body position calculating unit 14, an image-capturing-unit position calculating unit 15, a center-of-vehicle position calculating unit 16, a global positioning system (GPS) unit 17, a panel judging unit 18, a wireless communication unit 19, and a storage 20.

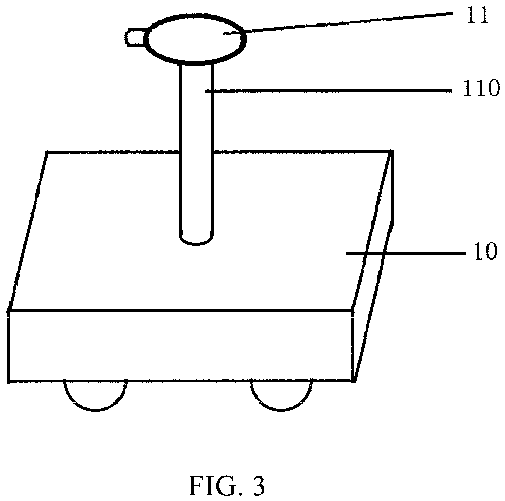

The image capturing unit 11 is disposed on the top of the vehicle body 10 or on outer sidewalls of the vehicle body 10. Please refer to FIG. 3, in a specific embodiment, an installed support 110 is disposed on the top of the vehicle body 10. The image capturing unit 11 is installed on the top of the installed support 110. The image capturing unit 11 has a horizontal view angle between 0 and 360 degrees. The image capturing unit 11 includes, but not limited to, a camera or an image sensor.

The image capturing unit 11 is configured to acquire peripheral images and/or pictures of the vehicle body in real-time. The frame edge recognizing unit 12 is connected to the image capturing unit 11 and is configured to recognize peripheral frame edges of the vehicle body 10 according to the images and/or the pictures and a moving direction of the vehicle body 10. The latitude-and-longitude line recognizing unit 13 is connected to the image capturing unit 11 and is configured to recognize the numbers of latitude lines 212 and longitude lines 211 existing between the vehicle body 10 and the frame edges 210 according to the images and/or the pictures and positions of the frame edges.

Specifically, in a specific embodiment, through cooperating with the frame edge recognizing unit 12 and the latitude-and-longitude line recognizing unit 13, the image capturing unit 11 can capture peripheral images or pictures of the vehicle body 10, which can definitely display the frame edges 210 around the solar panel 200 on which the vehicle body 10 is located. After the frame edge recognizing unit 12 recognized peripheral frame edges 210, the latitude-and-longitude line recognizing unit 13 recognizes the numbers of latitude lines and longitude lines which are between the vehicle body 10 and corresponding frame edges and are bounded by the recognized peripheral frame edges, so that positioning is realized.

However, under some conditions, due to an area of the solar panel 200 being greater, the frame edges 210 around the solar panel 200 on which the vehicle body 10 is located can not be displayed definitely according to peripheral images or pictures of the vehicle body 10 acquired by the image capturing unit 11. Only two adjacent frame edges or three frame edges may be displayed. At this moment, after the frame edge recognizing unit 12 recognized two adjacent frame edges, the latitude-and-longitude line recognizing unit 13 can recognize the numbers of latitude lines and longitude lines which are between two corresponding edges of the vehicle body 10 and two recognized frame edges and are bounded by two recognized frame edges, so that positioning is realized.

That is to say, for the positioning of the vehicle body 10 on the solar panel 200, the frame edges on the solar panel 200 on which the vehicle body 10 is located need be recognized first, and then the latitude lines and the longitude lines between the recognized frame edges and the vehicle body are recognized on the basis of the recognized frame edges or within the boundaries of the recognized frame edges, so that positioning in the coordinate system of panel resulted from the latitude lines and the longitude lines on the solar panel is realized. With reference to a number of frame edges on the solar panel 200 as a positioning basis or a positioning boundary, all of the frame edges need not be recognized, that is, four frame edges. If only two adjacent frame edges are recognized, then positioning by recognizing the latitude lines and the longitude lines can proceed.

The vehicle-body position calculating unit 14 is connected to the latitude-and-longitude line recognizing unit 13 and is configured to calculate a coordinate scope of the vehicle body 10 on the solar panel 200 according to the numbers of latitude lines and longitude lines between the vehicle body 10 and the frame edges.

The image-capturing-unit position calculating unit 15 is connected to the vehicle-body position calculating unit 14 and is configured to calculate a coordinate scope of the image capturing unit 11 on the solar panel 200 according to the size of the vehicle body 10, the coordinate scope of the vehicle body 10 on the solar panel 200, and relative positions of the image capturing unit 11 and the vehicle body 10.

The center-of-vehicle position calculating unit 16 is connected to the vehicle-body position calculating unit 14 and is configured to calculate a coordinate scope of the center of the vehicle body 10 on the solar panel 200 according to the size of the vehicle body 10 and the coordinate scope of the vehicle body 10 on the solar panel 200. The GPS unit 17 is configured to acquire a GPS position of the vehicle body 10 in real-time. The panel judging unit 18 is connected to the GPS unit 17 and is configured to judge information about the solar panel on which the vehicle body 10 is located according to the GPS position of the vehicle body 10 and a panel distribution chart.

The wireless communication unit 19 is wirelessly connected to a server 30 and is configured to wirelessly transmit the peripheral images and/or a positioning data of the vehicle body 10 to the server 30. The positioning data of the vehicle body 10 includes, but not limited to, at least one of information about the solar panel 200 on which the vehicle body 10 is located, the coordinate scope of the vehicle body 10 on the solar panel 200, a coordinate scope of the image capturing unit 11 on the solar panel 200, and a coordinate scope of the center of the vehicle body 10 on the solar panel 200. Preferably, the wireless communication unit 19 is a WIFI unit.

Further, the storage 20 is configured to prestore the numbers of latitude lines and longitude lines on each solar panel 200, the size of the vehicle body 10, relative positions of the image capturing unit 11 and the vehicle body 10, and at least one solar panel distribution chart.

Further, another embodiment of the present disclosure provides a method of positioning a solar panel cleaning robot including a vehicle body configured to move or stop on at least one solar panel. Each solar panel 200 is rectangular in shape. Four recognizable frame edges are disposed on edges of each solar panel. Lines of latitude and longitude perpendicular to one another are disposed on each solar panel to form a coordinate system of panel.

The method includes a global positioning system (GPS) positioning step S1, a panel judging step S2, an image capturing step S3, a frame edge recognizing step S4, a latitude-and-longitude line recognizing step S5, a vehicle-body position calculating step S6, an image-capturing-unit position calculating step S7, a center-of-vehicle position calculating step S8, an image transmitting step S9, and a positioning data transmitting step S 10.

In the GPS positioning step, acquiring a GPS position of the vehicle body in real-time. In the panel judging step, judging information about the solar panel on which the vehicle body is located according to the GPS position of the vehicle and a panel distribution chart.

For the positioning of the vehicle body on the solar panel, the frame edges on the solar panel on which the vehicle body is located need be recognized first, and then the latitude lines and the longitude lines between the recognized frame edges and the vehicle body are recognized on the basis of the recognized frame edges, so that positioning in the coordinate system of panel resulted from the latitude lines and the longitude lines on the solar panel is realized. A number of frame edges on the solar panel as a positioning basis or a positioning boundary need not be four, that is, all of four frame edges around the solar panel need not be recognized. If only two adjacent frame edges are recognized, then positioning by recognizing the latitude lines and the longitude lines can proceed.

Specifically, the above positioning by recognizing is divided into the following steps: the image capturing step, the frame edge recognizing step, and the latitude-and-longitude line recognizing step. In the image capturing step, acquiring peripheral images and/or pictures of the vehicle body in real-time. In the frame edge recognizing step, recognizing peripheral frame edges of the vehicle body according to the images and/or the pictures and a moving direction of the vehicle body 10. In the latitude-and-longitude line recognizing step, recognizing the numbers of latitude lines and longitude lines existing between the vehicle body and the frame edges according to the images and/or the pictures and positions of the frame edges.

Further, in the image capturing step of acquiring peripheral image data and/or pictures of the vehicle body, the data includes frame edge information of the solar panel on which the vehicle body is located. In the frame edge recognizing step, recognizing frame edge information of the acquired data, and regarding the recognized frame edges as a basis or a boundary for recognizing the latitude lines and the longitude lines. In the latitude-and-longitude line recognizing step, recognizing the numbers of latitude lines and longitude lines between corresponding frame edges and the vehicle body on the basis of the recognized frame edges or within the boundaries of the recognized frame edges, so that positioning in the coordinate system of panel resulted from the latitude lines and the longitude lines on the solar panel is realized.

In the vehicle-body position calculating step, calculating the coordinate scope of the vehicle body on the solar panel according to the numbers of latitude lines and longitude lines between the vehicle body and the frame edges. In the image-capturing-unit position calculating step, calculating the coordinate scope of the image capturing unit on the solar panel according to the size of the vehicle body, the coordinate scope of the vehicle body on the solar panel, and relative positions of the image capturing unit and the vehicle body.

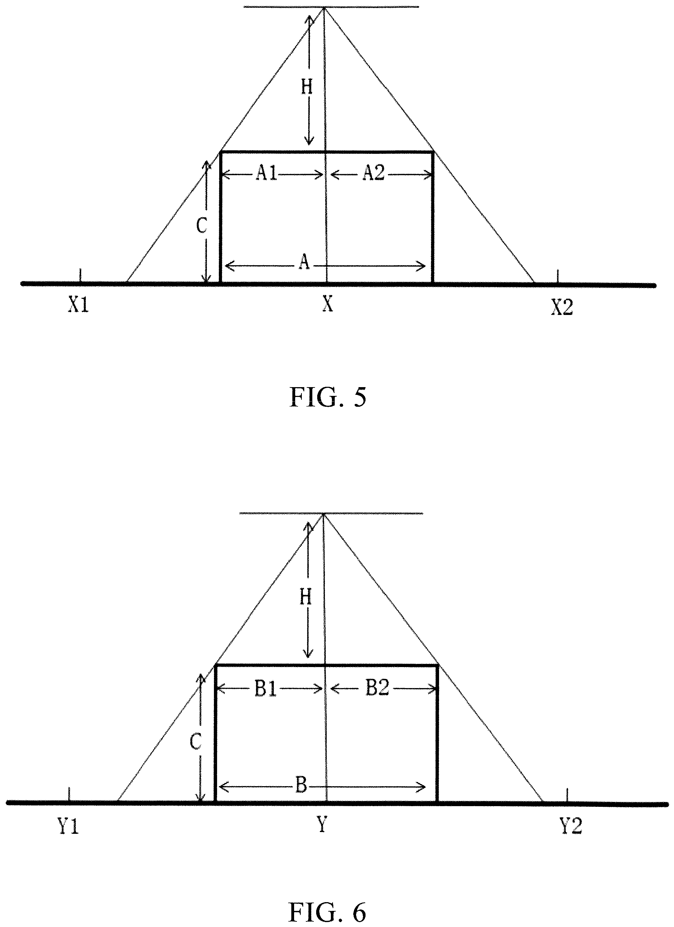

Specifically, please refer to FIG. 5 and FIG. 6, the length of the vehicle body being A, the width of the vehicle body being B, the thickness of the vehicle body being C are known as the size of the vehicle body. The coordinate of the vehicle body is (X,Y), wherein X1<X<X2, Y1<Y<Y2, X1 and X2 are two nearest coordinates of longitude lines on the solar panel away from the vehicle body, and Y1 and Y2 are two nearest coordinates of latitude lines on the solar panel away from the vehicle body. That is, XI, X2, Y1 and Y2 form the coordinate scope of the vehicle body. It is known that the height of the image capturing unit relative to the top face of the vehicle body is H.

It is known that the distances between the projection of the image capturing unit over the top face of the vehicle body and two short edges of the vehicle body are A1 and A2, wherein A2 = A-A1. It is known that the distances between the projection of the image capturing unit over the top face of the vehicle body and two long edges of the vehicle body are B1 and B2, wherein B2 = B-B1. The above three known conditions are relative positions of the image capturing unit and the vehicle body.

If the coordinate of the projection of the image capturing unit over the solar panel is assumed to be (x,y), then x and y meet the following equations: X1+(1+C/H)^{∗} (A-A1)< x < X2-(1+C/H)^{∗}A1; Y1+(1+C/H)^{∗}(B-B1) < y < Y2-(1+C/H)^{∗}B1. Two solutions are preferably selected in the present embodiment, that is, a position of a front center of the vehicle body (i.e., A1=A/2, B1=0) and a position of the center of the vehicle body (i.e., A1=A/2, B1=B/2).

In the center-of-vehicle position calculating step, calculating a coordinate scope of the center of the vehicle body on the solar panel according to the size of the vehicle body and the coordinate scope of the vehicle body on the solar panel.

Specifically, if the coordinate of the center of the vehicle body on the solar panel is assumed to be (x0,y0), then x0 and y0 meet the following equations: X1+A/2< x0 < X2-A/2; Y1+B/2 < y0 < Y-B/2.

In the image transmitting step, wirelessly transmitting the peripheral images of the vehicle body to the server. In the positioning data transmitting step, wirelessly transmitting a positioning data of the vehicle body to the server. The positioning data of the vehicle body includes, but not limited to, information about the solar panel on which the vehicle body is located and/or the coordinate scope of the vehicle body on the solar panel and/or the coordinate scope of the image capturing unit on the solar panel and/or the coordinate scope of the center of the vehicle body on the solar panel.

The present disclosure provides a positioning apparatus for a solar panel cleaning robot and a positioning method thereof to determine accurate regional positions of a vehicle body on a solar panel having a large area through GPS and recognizing peripheral latitude lines and longitude lines of the vehicle body on the solar panel so that operators can be aware of real-time positions of the cleaning robot immediately.

The above is only the preferred embodiment of the present disclosure. It should be noted that those skilled in the art, without departing from the principle of the present disclosure, may make improvements and modifications.

## Claims

1. A positioning apparatus for a solar panel cleaning robot (100), the solar panel cleaning robot (100) comprising a vehicle body (10) configured to move or stop on at least one solar panel (200), each solar panel (200) being rectangular in shape, four recognizable frame edges (210) being disposed on edges of each solar panel (200), lines of latitude and longitude perpendicular to one another being disposed on each solar panel (200) to form a coordinate system, **characterized in that** the positioning apparatus comprises:
at least one image capturing unit (11) configured to acquire peripheral images including images of the vehicle body (10) in real-time;
a body edge recognizing unit (12) connected to the at least one image capturing unit (11) and configured to recognize body edges of the vehicle body (10) according to the images and a moving direction of the vehicle body (10);
a latitude-and-longitude line recognizing unit (13) connected to the at least one image capturing unit (11) and configured to recognize the numbers of latitude lines and longitude lines existing between the vehicle body (10) and the frame edges (210) according to the images and positions of the frame edges (210); and
a vehicle-body position calculating unit (14) connected to the latitude-and-longitude line recognizing unit (13) and configured to calculate a coordinate scope of the vehicle body (10) on the at least one solar panel (200) according to the numbers of latitude lines and longitude lines between the vehicle body (10) and the frame edges (210).

2. The positioning apparatus of claim 1, **characterized in that** the positioning apparatus further comprises an image-capturing-unit position calculating unit (15) connected to the vehicle-body position calculating unit (14) and configured to calculate a coordinate scope of the at least one image capturing unit (11) on the at least one solar panel (200) according to the size of the vehicle body (10), the coordinate scope of the vehicle body (10) on the at least one solar panel (200), and relative positions of the at least one image capturing unit (11) and the vehicle body (10).

3. The positioning apparatus of claim 1, **characterized in that** the positioning apparatus further comprises a center-of-vehicle position calculating unit (16) connected to the vehicle-body position calculating unit (14) and configured to calculate a coordinate scope of the center of the vehicle body (10) on the at least one solar panel (200) according to the size of the vehicle body (10) and the coordinate scope of the vehicle body (10) on the at least one solar panel (200).

4. The positioning apparatus of claim 1, **characterized in that** the positioning apparatus further comprises:
a GPS unit (17) configured to acquire a GPS position of the vehicle body (10) in real-time; and
a panel judging unit (18) connected to the GPS unit (17) and configured to judge information about the at least one solar panel (200) on which the vehicle body (10) is located according to the GPS position of the vehicle body (10) and a panel distribution chart.

5. The positioning apparatus of any one of claims 1 to 4, **characterized in that** the positioning apparatus further comprises a wireless communication unit (19) wirelessly connected to a server (30) and configured to wirelessly transmit the peripheral images and/or a positioning data of the vehicle body (10) to the server (30), wherein the positioning data of the vehicle body (10) comprises information about the at least one solar panel (200) on which the vehicle body (10) is located, the coordinate scope of the vehicle body (10) on the at least one solar panel (200), a coordinate scope of the at least one image capturing unit (11) on the at least one solar panel (200), and a coordinate scope of the center of the vehicle body (10) on the at least one solar panel (200).

6. The positioning apparatus of any one of claims 1 to 4, **characterized in that** the positioning apparatus further comprises a storage (20) configured to prestore the numbers of latitude lines and longitude lines on each solar panel (200) and/or the size of the vehicle body (10) and/or relative positions of the at least one image capturing unit (11) and the vehicle body (10) and/or at least one panel distribution chart.

7. The positioning apparatus of claim 1, **characterized in that** the at least one image capturing unit (11) is disposed on the top of the vehicle body (10) or on outer sidewalls of the vehicle body (10), and the at least one image capturing unit (11) has a horizontal view angle between 0 and 360 degrees.

8. The positioning apparatus of claim 1, **characterized in that** the positioning apparatus further comprises an installed support (110), wherein the bottom of the installed support (110) is installed fixedly on the top of the vehicle body (10), and the at least one image capturing unit (11) is installed on the top of the installed support (110).

9. A method of positioning a solar panel cleaning robot (100), the solar panel cleaning robot (100) comprising a vehicle body (10) configured to move or stop on at least one solar panel (200), each solar panel (200) being rectangular in shape, four recognizable frame edges (210) being disposed on edges of each solar panel (200), lines of latitude and longitude perpendicular to one another being disposed on each solar panel (200) to form a coordinate system, **characterized in that** the method comprises:
an image capturing step for acquiring peripheral images including images of the vehicle body (10) in real-time;
a body edge recognizing step for recognizing body edges of the vehicle body (10) according to the images and a moving direction of the vehicle body (10);
a latitude-and-longitude line recognizing step for recognizing the numbers of latitude lines and longitude lines existing between the vehicle body (10) and the frame edges (210) according to the images and positions of the frame edges (210); and
a vehicle-body position calculating step for calculating a coordinate scope of the vehicle body (10) on the at least one solar panel (200) according to the numbers of latitude lines and longitude lines between the vehicle body (10) and the frame edges (210).

10. The method of claim 9, **characterized in that** the method further comprises an image-capturing-unit position calculating step for calculating a coordinate scope of an image capturing unit (11) on the at least one solar panel (200) according to the size of the vehicle body (10), the coordinate scope of the vehicle body (10) on the at least one solar panel (200), and relative positions of the image capturing unit (11) and the vehicle body (10).

11. The method of claim 9, **characterized in that** the method further comprises a center-of-vehicle position calculating step for calculating a coordinate scope of the center of the vehicle body (10) on the at least one solar panel (200) according to the size of the vehicle body (10) and the coordinate scope of the vehicle body (10) on the at least one solar panel (200).

12. The method of claim 9, **characterized in that** the method further comprises, prior to the image capturing step, a GPS positioning step for acquiring a GPS position of the vehicle body (10) in real-time, and a panel judging step for judging information about the at least one solar panel (200) on which the vehicle body (10) is located according to the GPS position of the vehicle body (10) and a panel distribution chart.

13. The method of any one of claims 9 to 12, **characterized in that** the method further comprises an image transmitting step for wirelessly transmitting the peripheral images of the vehicle body (10) to a server (30), and/or a positioning data transmitting step for wirelessly transmitting a positioning data of the vehicle body (10) to the server (30), wherein the positioning data of the vehicle body (10) comprises information about the at least one solar panel (200) on which the vehicle body (10) is located, the coordinate scope of the vehicle body (10) on the at least one solar panel (200), a coordinate scope of an image capturing unit (11) on the at least one solar panel (200), and a coordinate scope of the center of the vehicle body (10) on the at least one solar panel (200).

## Patentansprüche

1. Positionierungsvorrichtung für einen Solarpaneel-Reinigungsroboter (100), wobei der Solarpaneel-Reinigungsroboter (100) einen Fahrzeugkörper (10) umfasst, der dazu eingerichtet ist, sich auf zumindest einem Solarpaneel (200) zu bewegen oder zu halten, wobei jedes Solarpaneel (200) eine rechteckige Form aufweist, wobei vier erkennbare Rahmenkanten (210) an Kanten jedes Solarpaneels (200) angeordnet sind, Linien des Breiten- und Längengrads, die zueinander senkrecht sind, an jedem Solarpaneel (200) angeordnet sind, um ein Koordinatensystem zu bilden, **dadurch gekennzeichnet, dass** die Positionierungsvorrichtung umfasst:
zumindest eine Bilderfassungseinheit (11), die dazu eingerichtet ist, Umfangsbilder einschließlich Bilder des Fahrzeugkörpers (10) in Echtzeit zu erfassen;
eine Körperkantenerkennungseinheit (12), die mit der zumindest einen Bilderfassungseinheit (11) verbunden ist, und die dazu eingerichtet ist, Körperkanten des Fahrzeugkörpers (10) gemäß den Bildern und einer Bewegungsrichtung des Fahrzeugkörpers (10) zu erkennen;
eine Breiten- und Längengradlinien-Erkennungseinheit (13), die mit der zumindest einen Bilderfassungseinheit (11) verbunden ist, und die dazu eingerichtet ist, die Zahlen der Breiten- und Längengradlinien, die zwischen dem Fahrzeugkörper (10) und den Rahmenkanten (210) vorhanden sind, gemäß den Bildern und Positionen der Rahmenkanten (210) zu erkennen; und
eine Fahrzeugkörperpositions-Berechnungseinheit (14), die mit der Breiten- und Längengradlinien-Erkennungseinheit (13) verbunden ist und dazu eingerichtet ist, einen Koordinatenbereich des Fahrzeugkörpers (10) an dem zumindest einen Solarpaneel (200) gemäß den Zahlen der Breiten- und Längengradlinien zwischen dem Fahrzeugkörper (10) und den Rahmenkanten (210) zu berechnen.

2. Positionierungsvorrichtung nach Anspruch 1, **dadurch gekennzeichnet, dass** die Positionierungsvorrichtung ferner eine Bilderfassungseinheitspositions-Berechnungseinheit (15) umfasst, die mit der Fahrzeugkörperpositions-Berechnungseinheit (14) verbunden ist und die dazu eingerichtet ist, einen Koordinatenbereich der zumindest einen Bilderfassungseinheit (11) an dem zumindest einen Solarpaneel (200) gemäß der Größe des Fahrzeugkörpers (10), dem Koordinatenbereich des Fahrzeugkörpers (10) an dem zumindest einen Solarpaneel (200) und relativen Positionen der zumindest einen Bilderfassungseinheit (11) und des Fahrzeugkörpers (10) zu berechnen.

3. Positionierungsvorrichtung nach Anspruch 1, **dadurch gekennzeichnet, dass** die Positionierungsvorrichtung ferner eine Fahrzeugmitte-Positions-Berechnungseinheit (16) umfasst, die mit der Fahrzeugkörperpositions-Berechnungseinheit (14) verbunden ist und die dazu eingerichtet ist, einen Koordinatenbereich der Mitte des Fahrzeugkörpers (10) an dem zumindest einen Solarpaneel (200) gemäß der Größe des Fahrzeugkörpers (10) und dem Koordinatenbereich des Fahrzeugkörpers (10) an dem zumindest einen Solarpaneel (200) zu berechnen.

4. Positionierungsvorrichtung nach Anspruch 1, **dadurch gekennzeichnet, dass** die Positionierungsvorrichtung ferner umfasst:
eine GPS-Einheit (17), die dazu eingerichtet ist, eine GPS-Position des Fahrzeugkörpers (10) in Echtzeit zu erfassen; und
eine Paneel-Beurteilungseinheit (18), die mit der GPS-Einheit (17) verbunden ist und dazu eingerichtet ist, Informationen über das zumindest eine Solarpaneel (200), auf dem der Fahrzeugkörper (10) befindlich ist, gemäß der GPS-Position des Fahrzeugkörpers (10) und einem Paneel-Verteilungsdiagramm zu beurteilen.

5. Positionierungsvorrichtung nach einem der Ansprüche 1 bis 4, **dadurch gekennzeichnet, dass** die Positionierungsvorrichtung ferner eine drahtlose Kommunikationseinheit (19) umfasst, die mit einem Server (30) drahtlos verbunden ist und dazu eingerichtet ist, die Umfangsbilder und/oder eine Positionierungsangabe des Fahrzeugkörpers (10) dem Server (30) drahtlos zu übertragen, worin die Positionierungsangabe des Fahrzeugkörpers (10) Informationen über das zumindest eine Solarpaneel (200), auf dem der Fahrzeugkörper (10) befindlich ist, den Koordinatenbereich des Fahrzeugkörpers (10) an dem zumindest einen Solarpaneel (200), einen Koordinatenbereich der zumindest einen Bilderfassungseinheit (11) an dem zumindest einen Solarpaneel (200) und einen Koordinatenbereich der Mitte des Fahrzeugkörpers (10) an dem zumindest einen Solarpaneel (200) umfasst.

6. Positionierungsvorrichtung nach einem der Ansprüche 1 bis 4, **dadurch gekennzeichnet, dass** die Positionierungsvorrichtung ferner einen Speicher (20) umfasst, die dazu eingerichtet ist, die Zahlen der Breiten- und Längengradlinien an jedem Solarpaneel (200) und/oder die Größe des Fahrzeugkörpers (10) und/oder relative Positionen der zumindest einen Bilderfassungseinheit (11) und des Fahrzeugkörpers (10) und/oder zumindest ein Paneel-Verteilungsdiagramm vorzuspeichern.

7. Positionierungsvorrichtung nach Anspruch 1, **dadurch gekennzeichnet, dass** die zumindest eine Bilderfassungseinheit (11) an dem Oberteil des Fahrzeugkörpers (10) oder an äußeren Seitenwänden des Fahrzeugkörpers (10) angeordnet ist und die zumindest eine Bilderfassungseinheit (11) einen horizontalen Sichtwinkel zwischen 0 und 360 Grad hat.

8. Positionierungsvorrichtung nach Anspruch 1, **dadurch gekennzeichnet, dass** die Positionierungsvorrichtung ferner eine installierte Abstützung (110) umfasst, worin der Boden der installierten Abstützung (110) an dem Oberteil des Fahrzeugkörpers (10) fest installiert ist, und die zumindest eine Bilderfassungseinheit (11) an dem Oberteil der installierten Abstützung (110) installiert ist.

9. Verfahren zur Positionierung eines Solarpaneel-Reinigungsroboters (100), wobei der Solarpaneel-Reinigungsroboter (100) einen Fahrzeugkörper (10) umfasst, der dazu eingerichtet ist, sich auf zumindest einem Solarpaneel (200) zu bewegen oder zu halten, wobei jedes Solarpaneel (200) eine rechteckige Form aufweist, wobei vier erkennbare Rahmenkanten (210) an Kanten jedes Solarpaneels (200) angeordnet sind, Linien des Breiten- und Längengrads, die zueinander senkrecht sind, an jedem Solarpaneel (200) angeordnet sind, um ein Koordinatensystem zu bilden, **dadurch gekennzeichnet, dass** das Verfahren umfasst:
einen Bilderfassungsschritt zur Erfassung von Umfangsbildern einschließlich Bilder des Fahrzeugkörpers (10) in Echtzeit;
einen Körperkantenerkennungsschritt zur Erkennung von Körperkanten des Fahrzeugkörpers (10) gemäß den Bildern und einer Bewegungsrichtung des Fahrzeugkörpers (10);
einen Breiten- und Längengradlinien-Erkennungsschritt zur Erkennung der Zahlen der Breiten- und Längengradlinien, die zwischen dem Fahrzeugkörper (10) und den Rahmenkanten (210) vorhanden sind, gemäß den Bildern und Positionen der Rahmenkanten (210); und
einen Fahrzeugkörperpositions-Berechnungsschritt zum Berechnen eines Koordinatenbereichs des Fahrzeugkörpers (10) an dem zumindest einen Solarpaneel (200) gemäß den Zahlen der Breiten- und Längengradlinien zwischen dem Fahrzeugkörper (10) und den Rahmenkanten (210).

10. Verfahren nach Anspruch 9, **dadurch gekennzeichnet, dass** das Verfahren ferner einen Bilderfassungseinheitspositions-Berechnungsschritt zur Berechnung eines Koordinatenbereichs einer Bilderfassungseinheit (11) an dem zumindest einen Solarpaneel (200) gemäß der Größe des Fahrzeugkörpers (10), dem Koordinatenbereich des Fahrzeugkörpers (10) an dem zumindest einen Solarpaneel (200) und relativen Positionen der Bilderfassungseinheit (11) und des Fahrzeugkörpers (10) umfasst.

11. Verfahren nach Anspruch 9, **dadurch gekennzeichnet, dass** das Verfahren ferner einen Fahrzeugmitte-Positions-Berechnungsschritt zur Berechnung eines Koordinatenbereichs der Mitte des Fahrzeugkörpers (10) an dem zumindest einen Solarpaneel (200) gemäß der Größe des Fahrzeugkörpers (10) und dem Koordinatenbereich des Fahrzeugkörpers (10) an dem zumindest einen Solarpaneel (200) umfasst.

12. Verfahren nach Anspruch 9, **dadurch gekennzeichnet, dass** das Verfahren ferner, vor dem Bilderfassungsschritt, einen GPS-Positionierungsschritt zur Erfassung einer GPS-Position des Fahrzeugkörpers (10) in Echtzeit, und einen Paneel-Beurteilungsschritt zur Beurteilung von Informationen über das zumindest eine Solarpaneel (200), auf dem der Fahrzeugkörper (10) befindlich ist, gemäß der GPS-Position des Fahrzeugkörpers (10) und einem Paneel-Verteilungsdiagramm umfasst.

13. Verfahren nach einem der Ansprüche 9 bis 12, **dadurch gekennzeichnet, dass** das Verfahren ferner einen Bildübertragungsschritt zum drahtlosen Übertragen der Umfangsbilder des Fahrzeugkörpers (10) einem Server (30), und/oder einen Positionierungsangabenübertragungsschritt zum drahtlosen Übertragen einer Positionierungsangabe des Fahrzeugkörpers (10) dem Server (30) umfasst, worin die Positionierungsangabe des Fahrzeugkörpers (10) Informationen über das zumindest eine Solarpaneel (200), auf dem der Fahrzeugkörper (10) befindlich ist, den Koordinatenbereich des Fahrzeugkörpers (10) an dem zumindest einen Solarpaneel (200), einen Koordinatenbereich einer Bilderfassungseinheit (11) an dem zumindest einen Solarpaneel (200) und einen Koordinatenbereich der Mitte des Fahrzeugkörpers (10) an dem zumindest einen Solarpaneel (200) umfasst.

## Revendications

1. Appareil de positionnement pour un robot de nettoyage de panneaux solaires (100), le robot de nettoyage de panneaux solaires (100) comprenant une carrosserie de véhicule (10) configurée pour se déplacer ou s'arrêter sur au moins un panneau solaire (200), chaque panneau solaire (200) étant de forme rectangulaire, quatre bords de cadre reconnaissables (210) étant disposés sur les bords de chaque panneau solaire (200), des lignes de latitude et de longitude perpendiculaires les unes aux autres étant disposées sur chaque panneau solaire (200) pour former un système de coordonnées, **caractérisé en ce que** l'appareil de positionnement comprend :
au moins une unité de capture d'image (11) configurée pour acquérir des images périphériques comprenant des images de la carrosserie de véhicule (10) en temps réel ;
une unité de reconnaissance de bords de carrosserie (12) connectée à au moins une unité de capture d'image (11) et configurée pour reconnaître les bords de carrosserie de la carrosserie de véhicule (10) selon les images et une direction de déplacement de la carrosserie de véhicule (10) ;
une unité de reconnaissance de ligne de latitude et de longitude (13) connectée à au moins une unité de capture d'image (11) et configurée pour reconnaître les nombres de lignes de latitude et de lignes de longitude existant entre la carrosserie de véhicule (10) et les bords de cadre (210) selon les images et les positions des bords de cadre (210) ; et
une unité de calcul de position de la carrosserie de véhicule (14) connectée à l'unité de reconnaissance de ligne de latitude et de longitude (13) et configurée pour calculer une étendue de coordonnées de la carrosserie de véhicule (10) sur l'au moins un panneau solaire (200) en fonction des nombres de lignes de latitude et de lignes de longitude entre la carrosserie de véhicule (10) et les bords de cadre (210).

2. Appareil de positionnement selon la revendication 1, **caractérisé en ce que** l'appareil de positionnement comprend en outre une unité de calcul de la position d'unité de capture d'image (15) connectée à l'unité de calcul de la position de carrosserie de véhicule (14) et configurée pour calculer une étendue de coordonnées de l'au moins une unité de capture d'image (11) sur l'au moins un panneau solaire (200) selon la taille de la carrosserie de véhicule (10), l'étendue de coordonnées de la carrosserie de véhicule (10) sur l'au moins un panneau solaire (200), et les positions relatives de l'au moins une unité de capture d'image (11) et de la carrosserie de véhicule (10).

3. Appareil de positionnement selon la revendication 1, **caractérisé en ce que** l'appareil de positionnement comprend en outre une unité de calcul de la position du centre du véhicule (16) connectée à l'unité de calcul de la position de carrosserie de véhicule (14) et configurée pour calculer une étendue de coordonnées du centre de la carrosserie de véhicule (10) sur l'au moins un panneau solaire (200) selon la taille de la carrosserie de véhicule (10) et l'étendue de coordonnées de la carrosserie de véhicule (10) sur l'au moins un panneau solaire (200).

4. Appareil de positionnement selon la revendication 1, **caractérisé en ce que** l'appareil de positionnement comprend en outre :
une unité GPS (17) configurée pour acquérir une position GPS de la carrosserie de véhicule (10) en temps réel ; et
une unité d'évaluation de panneau (18) connectée à l'unité GPS (17) et configurée pour évaluer des informations concernant l'au moins un panneau solaire (200) sur lequel la carrosserie de véhicule (10) est située selon la position GPS de la carrosserie de véhicule (10) et un graphique de distribution de panneau.

5. Appareil de positionnement selon l'une quelconque des revendications 1 à 4, **caractérisé en ce que** l'appareil de positionnement comprend en outre une unité de communication sans fil (19) connectée sans fil à un serveur (30) et configurée pour transmettre sans fil les images périphériques et/ou des données de positionnement de la carrosserie de véhicule (10) au serveur (30), dans lequel les données de positionnement de la carrosserie de véhicule (10) comprennent des informations concernant l'au moins un panneau solaire (200) sur lequel la carrosserie de véhicule (10) est située, l'étendue de coordonnées de la carrosserie de véhicule (10) sur l'au moins un panneau solaire (200), une étendue de coordonnées de l'au moins une unité de capture d'image (11) sur l'au moins un panneau solaire (200), et une étendue de coordonnées du centre de la carrosserie de véhicule (10) sur l'au moins un panneau solaire (200).

6. Appareil de positionnement selon l'une quelconque des revendications 1 à 4, **caractérisé en ce que** l'appareil de positionnement comprend en outre une unité de stockage (20) configurée pour pré-enregistrer les nombres de lignes de latitude et de lignes de longitude sur chaque panneau solaire (200) et/ou la taille de la carrosserie de véhicule (10) et/ou les positions relatives de l'au moins une unité de capture d'image (11) et de la carrosserie de véhicule (10) et/ou au moins un graphique de distribution de panneau.

7. Appareil de positionnement selon la revendication 1, **caractérisé en ce que** l'au moins une unité de capture d'image (11) est disposée sur la partie supérieure de la carrosserie de véhicule (10) ou sur les parois latérales extérieures de la carrosserie de véhicule (10), et l'au moins une unité de capture d'image (11) a un angle de vue horizontale compris entre 0 et 360 degrés.

8. Appareil de positionnement selon la revendication 1, **caractérisé en ce que** l'appareil de positionnement comprend en outre un support installé (110), dans lequel le fond du support installé (110) est installé de manière fixe sur la partie supérieure de la carrosserie de véhicule (10), et l'au moins une unité de capture d'image (11) est installée sur la partie supérieure du support installé (110).

9. Procédé de positionnement d'un robot de nettoyage de panneaux solaires (100), le robot de nettoyage de panneaux solaires (100) comprenant une carrosserie de véhicule (10) configurée pour se déplacer ou s'arrêter sur au moins un panneau solaire (200), chaque panneau solaire (200) étant de forme rectangulaire, quatre bords de cadre reconnaissables (210) étant disposés sur les bords de chaque panneau solaire (200), des lignes de latitude et de longitude perpendiculaires les unes aux autres étant disposées sur chaque panneau solaire (200) pour former un système de coordonnées, **caractérisé en ce que** le procédé comprend :
une étape de capture d'image pour acquérir des images périphériques comprenant des images de la carrosserie de véhicule (10) en temps réel ;
une étape de reconnaissance de bords de carrosserie pour reconnaître les bords de carrosserie de la carrosserie de véhicule (10) selon les images et une direction de déplacement de la carrosserie de véhicule (10) ;
une étape de reconnaissance de lignes de latitude et de longitude pour reconnaître les nombres de lignes de latitude et de lignes de longitude existant entre la carrosserie de véhicule (10) et les bords de cadre (210) selon les images et les positions des bords de cadre (210) ; et
une étape de calcul de la position de la carrosserie de véhicule pour calculer une étendue de coordonnées de la carrosserie de véhicule (10) sur l'au moins un panneau solaire (200) selon les nombres de lignes de latitude et de lignes de longitude entre la carrosserie de véhicule (10) et les bords de cadre (210).

10. Procédé selon la revendication 9, **caractérisé en ce que** le procédé comprend en outre une étape de calcul de la position de l'unité de capture d'image pour calculer une étendue de coordonnées d'une unité de capture d'image (11) sur l'au moins un panneau solaire (200) selon la taille de la carrosserie de véhicule (10), l'étendue de coordonnées de la carrosserie de véhicule (10) sur l'au moins un panneau solaire (200), et les positions relatives de l'unité de capture d'image (11) et de la carrosserie de véhicule (10).

11. Procédé selon la revendication 9, **caractérisé en ce que** le procédé comprend en outre une étape de calcul de la position du centre du véhicule pour calculer une étendue de coordonnées du centre de la carrosserie de véhicule (10) sur l'au moins un panneau solaire (200) selon la taille de la carrosserie de véhicule (10) et l'étendue de coordonnées de la carrosserie de véhicule (10) sur l'au moins un panneau solaire (200).

12. Procédé selon la revendication 9, **caractérisé en ce que** le procédé comprend en outre, avant l'étape de capture d'image, une étape de positionnement GPS pour acquérir une position GPS de la carrosserie de véhicule (10) en temps réel, et une étape d'évaluation de panneau pour évaluer des informations concernant l'au moins un panneau solaire (200) sur lequel la carrosserie de véhicule (10) est située selon la position GPS de la carrosserie de véhicule (10) et un graphique de distribution de panneau.

13. Procédé selon l'une quelconque des revendications 9 à 12, **caractérisé en ce que** le procédé comprend en outre une étape de transmission d'image pour transmettre sans fil les images périphériques de la carrosserie de véhicule (10) à un serveur (30), et/ou une étape de transmission de données de positionnement pour transmettre sans fil des données de positionnement de la carrosserie de véhicule (10) au serveur (30), dans lequel les données de positionnement de la carrosserie de véhicule (10) comprennent des informations concernant l'au moins un panneau solaire (200) sur lequel la carrosserie de véhicule (10) est située, l'étendue de coordonnées de la carrosserie de véhicule (10) sur l'au moins un panneau solaire (200), une étendue de coordonnées d'une unité de capture d'image (11) sur l'au moins un panneau solaire (200), et une étendue de coordonnées du centre de la carrosserie de véhicule (10) sur l'au moins un panneau solaire (200).
